# EUROPÄISCHE PATENTSCHRIFT

(11) **EP 3 543 044 B1**
(45) Veröffentlichungstag und Bekanntmachung des Hinweises auf die Patenterteilung: **05.08.2020**
(21) Anmeldenummer: 18163135.9
(22) Anmeldetag: 21.03.2018
(51) Int. Cl.: B60G 7/00, B60G 13/00

(54) **FAHRWERKSLENKER MIT DÄMPFERANBINDUNGSABSCHNITT UND VERFAHREN ZUR HERSTELLUNG EINES FAHRWERKSLENKERS**
SUSPENSION ARM WITH DAMPER CONNECTING SECTION AND METHOD FOR PRODUCING A SUSPENSION ARM
BRAS DE SUSPENSION POURVU DE SECTION DE RACCORDEMENT D'AMORTISSEUR ET PROCÉDÉ DE FABRICATION D'UN BRAS DE SUSPENSION

(43) Veröffentlichungstag der Anmeldung: 25.09.2019
(73) Patentinhaber: Autotech Engineering Deutschland GmbH, 33647 Bielefeld (DE)
(72) Erfinder: Leimkühler, Leslie, 33613 Bielefeld (DE); Wächter, Udo, 49134 Wallenhorst (DE)
(74) Vertreter: Cohausz & Florack

(56) Entgegenhaltungen:
- DE-A1-102005 013 374
- DE-A1-102006 051 609
- DE-A1-102013 222 234
- DE-A1-102015 210 151

## Beschreibung

Die Erfindung betrifft einen Fahrwerkslenker, insbesondere einen Federlenker aus formbarem Grundmaterial, vorzugsweise Stahlblech, für ein Kraftfahrzeug, mit einem ersten Endabschnitt zur Anbindung an einen Fahrwerksträger, mit einem zweiten Endabschnitt zur radseitigen Anbindung und mit einem mindestens ein Lagerauge aufweisenden Dämpferanbindungsabschnitt zur Anbindung eines Dämpfers, wobei dem Lagerauge mindestens eine Einbauhilfe mit einer Auflagefläche für den Dämpfer zugeordnet ist. Ferner betrifft die Erfindung ein Verfahren zur Herstellung eines Fahrwerkslenkers, insbesondere eines Federlenkers für ein Kraftfahrzeug.

Fahrwerkslenker, auch Querlenker oder einfach Lenker genannt, dienen der Führung eines Fahrwerksrades an einer Radaufhängung eines Kraftfahrzeuges. Die Radaufhängung verbindet das Rad mit der Karosserie und führt es unter Gewährung bestimmter Freiheitsgrade. Fahrwerkslenker können beispielsweise aus Gussteilen oder bevorzugt aus umgeformten (Stahl-)Blechen erzeugt bzw. hergestellt werden.

Federlenker sind Fahrwerkslenker, die einen Abschnitt zur Abstützung eines Dämpfers und/oder eines Federelements aufweisen, welcher selbst gegen die Karosse abgestützt ist. Dämpfer werden im Stand der Technik auch als Dämpferelement oder Feder-Stoßdämpfer-Anordnung bezeichnet. Dämpfer werden mittels mindestens eines Lagerauges mit dem Fahrwerkslenker verbunden. Unter einem Lagerauge wird ein (Durchgangs-) Loch in dem Dämpferanbindungsabschnitt des Fahrwerkslenkers verstanden, welches zur Lagerung und/oder Befestigung des Dämpfers geeignet ist.

Im Rahmen der Montage eines vormontierten Fahrwerks an die Karosserie wird üblicherweise ein bereits mit der Karosserie verbundener Dämpfer an dem Dämpferanbindungsabschnitt des Fahrwerkslenkers montiert. Der Dämpfer wird hierzu mittels eines Schraubbolzens mit dem mindestens ein Lagerauge aufweisenden Dämpferanbindungsabschnitt des Fahrwerkslenkers verbunden.

Damit der Dämpfer seine bestimmungsgemäße Funktion ausüben kann, wird dieser unter einer gewissen Vorspannung montiert. Übliche Vorspannungen eines solchen Dämpferelements können dabei Anpresskräfte von bis zu 10 kN auf den Fahrwerkslenker bzw. den Dämpferanbindungsabschnitt des Fahrwerkslenkers ausüben.

Um ein prozesssicheres Anschrauben des Dämpfers trotz dieser hohen Anpresskräfte an dem mindestens einen Lagerauge des Fahrwerkslenkers zu ermöglichen, ist es aus dem Stand der Technik bekannt, eine sogenannte Einbauhilfe vorzusehen, die eine Auflagefläche für den Dämpfer aufweist. Mittels der Auflagefläche kann der Dämpfer zunächst am Fahrwerkslenker zentriert, anschließend unter die gewünschte Vorspannung gesetzt und schließlich mit einem Schraubbolzen an dem mindestens einen Lagerauge des Fahrwerkslenkers befestigt werden.

Aus dem Stand der Technik ist es bekannt, besagte Auflagefläche für einen Dämpfer mittels eines Dämpfer-Stoppers vorzusehen, welcher an dem Fahrwerkslenker in einem separaten Prozessschritt angebracht wird. Beispielsweise wird ein Dämpfer-Stopper mittels vier Schweißpunkten an dem Fahrwerkslenker im Bereich des Lagerauges angeschweißt, so dass die durch den Dämpfer-Stopper definierte Auflagefläche dem Lagerauge zugeordnet ist. Die Realisierung der Einbauhilfe durch Anschweißen eines Zusatzelements in Form des Dämpfer-Stoppers verursachte zusätzliche Materialkosten und erhebliche Prozesskosten, insbesondere Kosten für das Anschweißen. Ferner besteht mitunter die Gefahr, dass sich das Zusatzelement löst, wenn die Schweißverbindung mangelhaft ausgeführt wurde und/oder durch Korrosion beansprucht wird.

Die DE 10 2015 210 151 A1 offenbart eine Befestigungsanordnung eines in einer Radaufhängung eines Fahrzeugs vorgesehenen und mit einem Ende am FahrzeugAufbau abgestützten Schwingungsdämpfers an einem Radträger oder einem radführenden Lenker über ein Gummilager. Das Gummilager weist ein zwischen einer Lager-Innenbuchse und einer Lager-Außenbuchse vorgesehenes Elastomerelement auf und ist mittels einer durch die Innenbuchse hindurchgeführten Schraube in einer derartigen Position am Radträger oder radführenden Lenker befestigt, dass das Elastomerelement im nicht durch das Gewicht des Fahrzeug-Aufbaus belasteten Montagezustand solchermaßen vorgespannt ist, dass es bei auf festem Untergrund abgestellten Fahrzeug und somit bei Belastung der Radaufhängung mit dem Gewicht des Aufbaus zumindest annähernd spannungsfrei ist. Dabei weist ein in Achsrichtung der Schraube über das Elastomerelement hinausgehender Endabschnitt der Gummilager-Innenbuchse eine von einer Kreisform abweichende Außenform auf und wird mittels einer zumindest abschnittsweise an diese Außenform angepassten Hilfsstruktur in die im Montagezustand zur gewünschten Vorspannung führenden Position gebracht.

Davon ausgehend lag der Erfindung die Aufgabe zugrunde, einen Fahrwerkslenker der eingangs genannten Art zu schaffen, dessen Einbauhilfe sich prozesssicher und kostengünstig herstellen lässt.

Gelöst wird diese Aufgabe durch einen Fahrwerkslenker mit den in Anspruch 1 angegebenen Merkmalen. Bevorzugte und vorteilhafte Ausgestaltungen des erfindungsgemäßen Fahrwerkslenkers sind in den auf Anspruch 1 rückbezogenen Unteransprüchen angegeben.

Der Fahrwerkslenker, insbesondere Federlenker aus formbarem Grundmaterial, vorzugsweise Stahlblech, für ein Kraftfahrzeug, mit einem ersten Endabschnitt zur Anbindung an einen Fahrwerksträger, mit einem zweiten Endabschnitt zur radseitigen Anbindung und mit einem mindestens ein Lagerauge aufweisenden Dämpferanbindungsabschnitt zur Anbindung eines Dämpfers, wobei dem Lagerauge mindestens eine Einbauhilfe mit einer Auflagefläche für den Dämpfer zugeordnet ist, ist dadurch gekennzeichnet, dass die Einbauhilfe einstückig mit dem Fahrwerkslenker ausgebildet ist, wobei die Einbauhilfe in Form einer Lasche aus dem Grundmaterial des Fahrwerkslenkers freigeschnitten und gegenüber einem Körperabschnitt des Fahrwerkslenkers umgestellt ist, und wobei zumindest ein Teil der Lasche als Auflagefläche für den Dämpfer ausgebildet ist. Bei dem Dämpfer kann es sich um einen separaten Dämpfer oder um einen mit einer Schraubenfeder kombinierten Dämpfer, d.h. ein sogenanntes Federdämpfersystem, handeln.

Die Lasche lässt sich mit relativ geringem Aufwand aus dem Grundmaterial des Fahrwerkslenkers freischneiden, so dass die Auflagefläche der Einbauhilfe in produktionstechnisch günstiger Weise durch die Lasche zur Verfügung gestellt werden kann. Im Vergleich zu der herkömmlichen Lösung, bei der ein zusätzliches Bauelement als Anschlag angeschweißt wird, entfällt bei der erfindungsgemäßen Lösung der sonst übliche Schweißprozess. Hierdurch können Fertigungskosten gespart werden. Ebenfalls werden Kosten bei der Überprüfung des Fahrwerkslenkers eingespart, da keine Schweißpunkte vorhanden sind, die im Rahmen einer Qualitätsüberprüfung untersucht bzw. überprüft werden müssten.

Es liegt allerdings auch im Rahmen der Erfindung, die umgestellte Lasche an dem benachbarten Schenkel des rinnenförmigen Fahrwerkslenkers anzuschweißen. Hierdurch kann gegebenenfalls die Festigkeit der umgestellten Lasche verbessert werden. Eine solche Schweißverbindung der umgestellten Lasche ist dann bevorzugt als punktförmige Schweißverbindung ausgeführt.

Ferner werden durch den Wegfall der separat hergestellten, als zusätzliches Bauteil an den Fahrwerkslenker anzuschweißenden Einbauhilfe Materialkosten gespart. Bei der erfindungsgemäßen Lösung wird die Einbauhilfe dagegen aus dem ohnehin vorhandenen Grundmaterial des Fahrwerkslenkers hergestellt, so dass für die Einbauhilfe keine zusätzlichen Materialkosten anfallen.

Zusätzlich zeichnet sich die erfindungsgemäße Lösung gegenüber den aus dem Stand der Technik bekannten Einbauhilfen, die als Zusatzteile an den Fahrwerkslenker angeschweißt werden, durch die Vermeidung von Korrosionsproblemen aus. Denn bei der angeschweißten Einbauhilfe ergibt sich in der Regel ein Spalt zwischen Einbauhilfe und Fahrwerkslenker. Dieser Spalt ist besonders anfällig für Korrosion. Selbst bei Aufbringen von Korrosionsschutz kann nicht garantiert werden, dass der gesamte Spalt mit Korrosionsschutz gefüllt ist. Bei der erfindungsgemäßen Lösung wird dagegen ein korrosionsanfälliger Spalt vermieden.

Zur Verwirklichung der erfindungsgemäßen Lösung ist es insbesondere möglich, die als Einbauhilfe dienende Lasche in einer Stanzpresse freizuschneiden und in einem Umformwerkzeug umzustellen, welche ohnehin zur Herstellung des Fahrwerkslenkers aus formbarem Grundmaterial, vorzugsweise Stahlblech, benötigt werden. Bevorzugt wird die Auflagefläche der Lasche nach dem Umstellschritt endbearbeitet. Hierzu kann ein Feinstanzen oder Kalibrieren der Auflagefläche der Lasche vorgesehen werden, wodurch die Positionsgenauigkeit und Konzentrizität der Auflagefläche zu dem mindestens einen Lagerauge erhöht wird.

Die durch die Lasche bereitgestellte Auflagefläche für den Dämpfer kann auch als Dämpferanschlag bezeichnet werden.

In einer vorteilhaften Ausgestaltung der Erfindung ist die Auflagefläche im Wesentlichen in Form eines Kreisbogens oder eines Ellipsenbogens ausgebildet. Hierdurch lässt sich der Dämpfer sehr komfortabel und zuverlässig an dem Fahrwerkslenker ausrichten bzw. zentrieren, so dass der Dämpfer unter Vorspannung gesetzt und mit dem Lagerauge verbunden werden kann.

Eine weitere bevorzugte Ausgestaltung der Erfindung ist dadurch gekennzeichnet, dass eine Stirnseite der Lasche oder zumindest ein Teil der Stirnseite der Lasche die Auflagefläche bildet. Dabei ist es bevorzugt, dass die Stirnseite der Lasche neben der Auflagefläche zwei die Auflagefläche begrenzende, vorzugsweise im Wesentlichen parallel zueinander verlaufende, Randabschnitte aufweist. Hierdurch kann eine erhöhte Festigkeit der Auflagefläche der Lasche sichergestellt werden, sodass der Dämpfer während der Montage unter eine hohe Vorspannung beziehungsweise Vorspannkraft gesetzt werden kann, ohne dass die als Einbauhilfe fungierende Lasche nachgibt.

Des Weiteren ist es bevorzugt, dass die Lasche einen umgestellten Abschnitt aufweist, welcher als Auflagefläche für den Dämpfer dient. Der umgestellte Abschnitt kann dabei wahlweise in Richtung des Lagerauges oder in die entgegengesetzte Richtung umgestellt sein. Durch den umgestellten Abschnitt wird die Auflagefläche für den Dämpfer für dessen Montage am Fahrwerkslenker vergrößert. Dadurch können die zum Vorspannen des Dämpfers erforderlichen Kräfte mittels des Fahrwerklenkers über die Lasche gleichmäßiger und zuverlässiger auf den Dämpfer übertragen werden.

Zur optimalen Ausrichtung des zu montierenden Dämpfers relativ zu dem Lagerauge ist es vorteilhaft, wenn gemäß einer weiteren Ausgestaltung der Erfindung die Auflagefläche im Wesentlichen parallel oder koaxial zu der Mittelachse des Lagerauges verläuft.

Eine weitere vorteilhafte Ausgestaltung der Erfindung ist dadurch gekennzeichnet, dass zumindest der Dämpferanbindungsabschnitt des Fahrwerkslenkers mit Ausnahme der Lasche als im Wesentlichen rinnenförmiger Körperabschnitt umfassend eine Grundfläche und zwei die Grundfläche seitlich begrenzende Schenkel ausgebildet ist, wobei mindestens einer der Schenkel das mindestens eine Lagerauge aufweist. Durch die Ausbildung des Fahrwerkslenkers als rinnenförmiger Körper, welcher zwei Schenkel aufweist, können die Funktionalitäten eines Fahrwerkslenkers der hier in Rede stehenden Art, insbesondere eines Federlenkers mit einer Stoßdämpferanbindung, bei relativ geringem Bauteilgewicht in konstruktiv günstiger Weise zur Verfügung gestellt werden.

Bevorzugt begrenzt die Lasche eine in der Grundfläche des rinnenförmigen Körperabschnitts des Fahrwerkslenkers ausgebildete Aussparung, wobei die Lasche im Wesentlichen parallel zu dem das Lagerauge aufweisenden Schenkel des Fahrwerkslenkers umgestellt ist. Eine Aussparung in Form eines fensterartigen Ausschnitts kann das Gewicht eines Fahrwerkslenkers reduzieren. Eine solche Aussparung kann beispielsweise in der Grundfläche eines rinnenförmigen Fahrwerkslenkers, insbesondere in dem dem Lagerauge benachbarten Bereich der Grundfläche, vorgesehen sein.

Der Bereich unterhalb des Lagerauges muss üblicherweise einen gewissen Freiraum bereithalten und kann normalerweise als Stanzschnittabfall betrachtet werden. Dieser Freiraum wird typischerweise durch eine Aussparung (Durchgangsöffnung) realisiert. Der Abschnitt des Grundmaterials, vorzugsweise Stahlblechs, welcher zur Bildung der Aussparung aus der dem Grundmaterial ausgeschnitten wird, stellt daher Schnittabfall dar. Durch die erfindungsgemäße Lösung kann ein Teil dieses als Schnittabfall eigentlich überflüssigen Grundmaterials für die Bereitstellung der Dämpfer-Einbauhilfe wirksam genutzt werden. Hierdurch reduzieren sich die Materialkosten und der Schnittabfall wird minimiert, was zusätzlich auch in ökologischer Hinsicht von Vorteil ist.

Des Weiteren ist es bevorzugt, dass die Lasche zu dem das Lagerauge aufweisenden Schenkel des Fahrwerkslenkers einen Abstand im Bereich von größer 0 bis 60 mm, bevorzugt im Bereich von größer 0 bis 30 mm, aufweist. Durch den genannten Abstand wird in vorteilhafter Weise eine vollflächige und damit zuverlässig wirksame Korrosionsschutzbeschichtung der Lasche sowie des Schenkels bzw. der Schenkel im Bereich des Lagerauges ermöglicht. Der Korrosionsschutz kann beispielsweise durch Tauchbeschichten oder Sprühbeschichten auf den Fahrwerkslenker aufgebracht werden.

Besonders bevorzugt weist der Dämpferanbindungsabschnitt mindestens zwei einander gegenüberliegende und miteinander fluchtende Lageraugen auf, wobei die als Einbauhilfe dienende Lasche doppelt ausgeführt ist, indem jedem der beiden Lageraugen eine solche Lasche mit einer Auflagefläche für den Dämpfer zugeordnet ist. Eine derartige Ausgestaltung ist vorteilhaft hinsichtlich der Zentrierungs- bzw. Positionierungseigenschaften des Dämpfers während der Montage. Insbesondere wird hierdurch die während der Anbindung des Dämpfers auf die Lasche ausgeübte Kraft reduziert, indem die Kraft auf zwei Laschen verteilt wird, wodurch die Prozesssicherheit der Dämpferzentrierung bei der fahrwerksseitigen Fahrwerkslenkermontage verbessert wird. Hinsichtlich der Dämpferzentrierung während der Fahrwerkslenkermontage ist es insbesondere bevorzugt, dass die beiden umgestellten Laschen zueinander spiegelsymmetrisch ausgebildet sind. Des Weiteren ist es bevorzugt, dass der Fahrwerkslenker insgesamt im Wesentlichen spiegelsymmetrisch ausgebildet ist.

Der erfindungsgemäße Fahrwerkslenker ist vorzugsweise als einschaliges Blechbauteil ausgeführt.

Die oben angegebene Aufgabe der vorliegenden Erfindung wird ebenfalls durch ein Verfahren zur Herstellung eines Fahrwerkslenkers mit den in Anspruch 12 angegebenen Merkmalen gelöst.

Das erfindungsgemäße Verfahren umfasst folgende Merkmale bzw. Schritte:
- Metallblech, vorzugsweise Stahlblech, wird zu einer Platine zugeschnitten,
- in das Metallblech werden vor, während oder nach dem Zuschnitt der Platine zumindest ein Lagerauge zur Anbindung eines Dämpfers und zumindest eine Aussparung ausgeschnitten,
- die Aussparung wird dergestalt ausgeschnitten, dass durch die Aussparung mindestens eine Lasche freigeschnitten ist,
- die Platine wird in ein rinnenförmiges, eine Grundfläche und zwei sich an die Grundfläche seitlich anschließende Schenkel aufweisendes Bauteil umgeformt, so dass das Lagerauge in einem Schenkel und die Aussparung in der Grundfläche angeordnet sind, und
- nach dem Ausschneiden der Aussparung und dem Formen des rinnenförmigen Bauteils wird die mindestens eine Lasche derart umgestellt, dass ein Teil der Lasche als Auflagefläche für einen mit dem Lagerauge zu verbindenden Dämpfer dient.

Die Vorteile eines solchen Verfahrens entsprechen den oben in Zusammenhang mit dem erfindungsgemäßen Fahrwerkslenker erwähnten Vorteilen.

Nach einer bevorzugten Ausgestaltung des erfindungsgemäßen Verfahrens wird die Auflagefläche nach dem Umstellschritt feingestanzt oder kalibriert, so dass die Positionsgenauigkeit und Konzentrizität der Auflagefläche zu dem mindestens einen Lagerauge erhöht wird.

Eine weitere bevorzugte Ausgestaltung des Verfahrens ist dadurch gekennzeichnet, dass die Lasche bezogen auf die die Aussparung aufweisende Grundfläche des rinnenförmigen Bauteils mit einem Umstellwinkel im Bereich von 85° bis 95°, vorzugsweise mit einem Umstellwinkel von im Wesentlichen 90°, umgestellt wird. Hierdurch kann in vorteilhafter Weise eine Auflagefläche zur Verfügung gestellt werden, die im Wesentlichen parallel oder koaxial zu der Mittelachse des Lagerauges verläuft.

Nach einer weiteren bevorzugten Ausgestaltung des Verfahrens wird die Lasche so umgeformt, dass sie eine kragenförmige Auflagefläche als Auflagefläche für den Dämpfer aufweist. Eine kragenförmige Auflagefläche führt zu einer vorteilhaften Zentrierung des Dämpfers während der Montage. Insbesondere wird durch eine kragenförmige Auflagefläche eine größere Kraftübertragungsfläche bereitgestellt.

Nach einer weiteren vorteilhaften Ausgestaltung des Verfahrens wird die Lasche derart umgestellt, dass sie zu dem das Lagerauge aufweisenden Schenkel des Fahrwerkslenkers einen Abstand im Bereich von größer 0 bis 60 mm, bevorzugt im Bereich von größer 0 bis 30 mm, aufweist.

Eine weitere Ausgestaltung des Verfahrens ist dadurch gekennzeichnet, dass umgestellte Lasche an dem benachbarten Schenkel des rinnenförmigen Fahrwerkslenkers angeschweißt wird, wobei diese Schweißverbindung bevorzugt als punktförmige Schweißverbindung ausgeführt wird.

Nachfolgend wird die Erfindung anhand einer Ausführungsbeispiele darstellenden Zeichnung näher erläutert. Es zeigen:
- Fig. 1: eine perspektivische Darstellung eines ersten Ausführungsbeispiels eines rinnenförmig ausgebildeten Fahrwerkslenkers;
- Fig. 2: der in Fig. 1 dargestellte Fahrwerkslenker in einer Draufsicht;
- Fig. 3: der Fahrwerkslenker aus den Figuren 1 und 2 vor dem Umstellen freigeschnittenen Laschen in einer Draufsicht;
- Fig. 4a: eine Querschnittansicht des Fahrwerkslenkers entlang der Schnittlinie A-A in Fig. 2;
- Fig. 4b: ein zweites Ausführungsbeispiel eines rinnenförmigen Fahrwerkslenkers in einer Querschnittansicht ähnlich der Querschnittansicht in Fig. 4a; und
- Fig. 4c: ein drittes Ausführungsbeispiel eines rinnenförmigen Fahrwerkslenkers in einer Querschnittansicht ähnlich der Querschnittansicht in Fig. 4a.

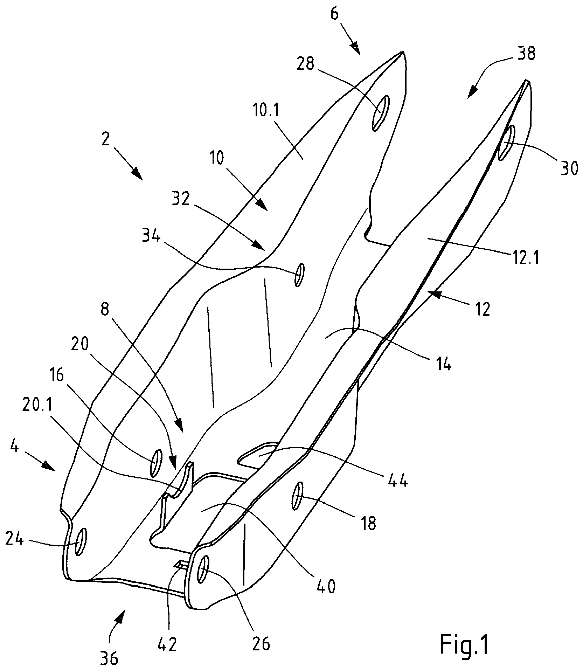

Fig. 1 zeigt einen Fahrwerkslenker 2 für ein Kraftfahrzeug. Der Fahrwerkslenker 2 kann auch als Federlenker bezeichnet werden bzw. stellt symbolisch einen Federlenker dar. Der Fahrwerkslenker 2 ist aus einer Metallplatine hergestellt, die in einen im Wesentlichen rinnenförmigen Körper umgeformt ist. Der Fahrwerkslenker 2 weist einen ersten Endabschnitt 4 zur Anbindung an einen Fahrwerksträger und einen zweiten Endabschnitt 6 zur Anbindung an einen Radträger auf. Zwischen den beiden Endabschnitten 4 und 6 ist ein Dämpferanbindungsabschnitt 8 zur Anbindung eines Dämpfers angeordnet.

Der Fahrwerkslenker 2 besteht auch hochfestem Metallblech, vorzugsweise Stahlblech. Das zu seiner Herstellung verwendete Metall- bzw. Stahlblech hat bevorzugt eine Streckgrenze von mehr als 650 MPa. Besonders bevorzugt handelt es sich um Mehrphasen- oder Complexphasenstahl, welcher beispielsweise eine Zugfestigkeit von mindestens 800 MPa und eine Streckgrenze von mindestens 680 MPa aufweist. Die Blechdicke des Fahrwerkslenkers 2 liegt beispielsweise im Bereich von 1 bis 4 mm, vorzugsweise im Bereich von 1,5 bis 3 mm.

Der im Wesentlichen rinnenförmig ausgebildete Fahrwerkslenker 2 hat zwei Schenkel 10 und 12, die eine Grundfläche 14 des Rinnenkörpers begrenzen.

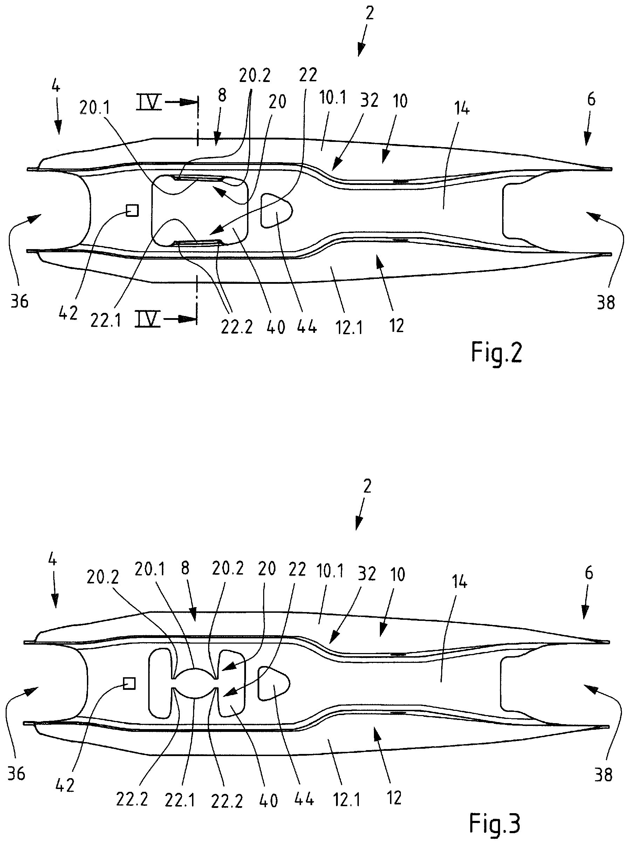

Im Bereich des Dämpferanbindungsabschnitts 8 weisen die Schenkel 10 und 12 zwei miteinander fluchtende Lageraugen 16 und 18 in Form von Durchgangslöchern auf. Die Lageraugen 16 und 18 sind vorzugsweise als kreisrunde Durchgangslöcher ausgeführt. Die Lageraugen 16 und 18 dienen der Anbindung des Dämpfers an den Fahrwerkslenker 2. Den Lageraugen 16 und 18 ist jeweils eine in Form einer umgestellten Lasche 20 und 22 ausgebildete Einbauhilfe zugeordnet. Dabei erstrecken sich die Laschen 20 und 22 im Wesentlichen parallel zu den Schenkeln 10 und 12 des rinnenförmigen Fahrwerkslenkers 2. An ihren Stirnseiten oder Enden weisen die Laschen 20 und 22 jeweils eine Auflagefläche 20.1 und 22.1 auf, wobei die Auflageflächen 20.1 sowie 22.1 bevorzugt seitlich durch im Wesentlichen parallel zueinander verlaufende Randabschnitte 20.2 sowie 22.2 begrenzt werden (siehe insbesondere Fig. 3). Die Randabschnitte 20.2 bzw. 22.2 enden an der Stirnseite der jeweiligen Lasche 20 und 22 in Form von im Wesentlichen geradlinigen Kanten, wobei diese Kanten die jeweilige Auflagefläche 20.1 oder 22.1 einfassen. Die Auflagefläche 20.1 bzw. 22.1 ist in dem in den Figuren 1 bis 3 gezeigten Ausführungsbeispiel des Fahrwerkslenkers 2 im Wesentlichen in Form eines Ellipsenbogens ausgebildet. Alternativ können die Auflagefläche 20.1 bzw. 22.1 jeweils in Form eines Kreisbogens ausgebildet sein. Die jeweilige Auflagefläche 20.1 oder 22.1 kann auch als konkave Kante oder konkaver Dämpferanschlag bezeichnet werden. Die im Wesentlichen geradlinigen Kanten der Randabschnitte 20.2 bzw. 22.2 der jeweiligen Lasche 20 liegen beispielsweise auf einer gemeinsamen Fluchtlinie.

Die Schenkel 10 und 12 des Fahrwerkslenkers 2 verlaufen durchgehend von dem ersten Endabschnitt 4, mit welchem der Fahrwerkslenker 2 mit einem Radträger verbunden werden kann, bis zu dem zweiten Endabschnitt 6, mit welchem der Fahrwerkslenker 2 mit einem Fahrwerksträger, beispielsweise einem Hinterachsträger verbunden werden kann. Der erste Endabschnitt 4 ist gabelförmig ausgebildet und weist zwei miteinander fluchtende Durchgangslöcher 24 und 26 auf. Der zweite Endabschnitt 6 ist ebenfalls gabelförmig ausgebildet und weist miteinander fluchtende Langlöcher 28 und 30 auf, die zur Anbindung des Fahrwerkslenkers 2 an einen Fahrwerksträger dienen.

Zwischen dem zweiten Endabschnitt 6 und dem Dämpferanbindungsabschnitt 8 ist ein verengter Zwischenabschnitt 32 ausgebildet, in welchem der Abstand der beiden Schenkel 10 und 12 zueinander geringer ist als an den beiden Endabschnitte 4 und 6 sowie an dem Dämpferanbindungsabschnitt 8. Der Zwischenabschnitt 32 des Fahrwerkslenkers 2 weist zwei miteinander fluchtende Durchgangslöcher 34 auf, an denen weitere Bauteile mit dem Fahrwerkslenker 2 verbunden werden können.

Die Schenkel 10 und 12 des rinnenförmigen Körpers weisen an dessen Oberseite nach außen umgebogen Flansch oder Kragen 10.1, 12.1 auf. Diese Kragen 10.1, 12.1 sind jeweils durchgehend zwischen den beiden Endabschnitten 4 und 6 ausgebildet. Die Breite der Kragen 10.1 und 12.1 ändert sich entlang der Schenkel 10, 12. Ihre größte Breite haben die Kragen 10.1 und 12.1 im Bereich des verengten Zwischenabschnitts 32. Von dort nimmt die Breite der Kragen 10.1 und 12.1 in Richtung der Endabschnitte 4 und 6 hin ab.

Wie insbesondere der Fig. 2 entnommen werden kann, weist die Grundfläche 14 des Fahrwerkslenkers 2 an den dem ersten Endabschnitt 4 und dem zweiten Endabschnitt 6 zugeordneten Bereichen nischenartige Aussparungen 36 und 38 auf. Zusätzlich ist in der Grundfläche 14 des Fahrwerkslenkers 2 eine Öffnung als Aussparung 40 ausgeschnitten, welche der Gewichtsreduzierung des Fahrwerkslenkers 2 und der Ausbildung der Laschen 20 und 22 dient. Zwei weitere in die Grundfläche 14 eingebrachte Öffnungen 42 und 44 dienen der Befestigung zusätzlicher Bauteile, als Durchführung für eine Fluidleitung und/oder als Zugangsöffnung für ein Einstellmittel oder Werkzeug.

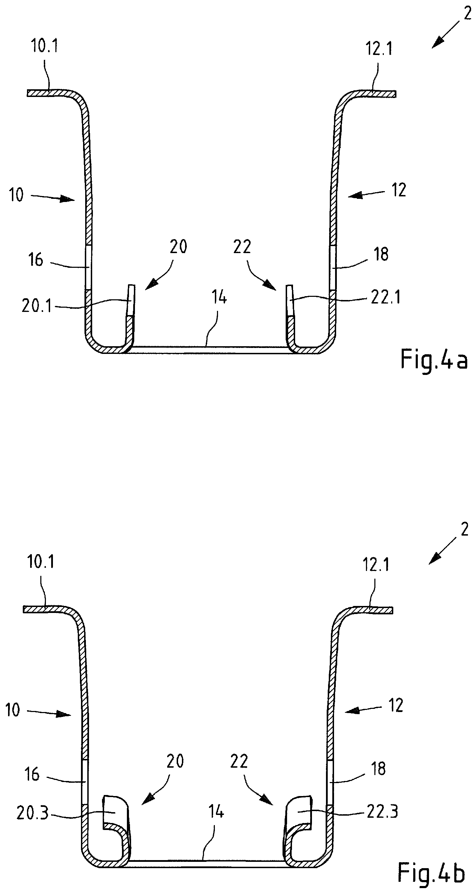

In Fig. 3 ist der in den Figuren 1 und 2 dargestellte Fahrwerkslenker 2 vor dem Umstellen der in der Grundfläche 14 freigeschnittenen Laschen in Draufsicht gezeigt. Es ist erkennbar, dass die Aussparung 40 in der Grundfläche 14 derart ausgebildet wird, dass die Laschen 20 und 22 durch bloßes Umstellen ihre gewünschte Funktionalität als Einbauhilfen für den Dämpfer ausüben. Die Laschen 20 und 22 werden bevorzugt um einen Winkel von ca. 90° gegenüber der Grundfläche 14 umgestellt. Ein solcher Umstellwinkel lässt sich insbesondere der in Fig. 4a gezeigten Querschnittansicht des rinnenförmigen Fahrwerkslenkers 2 entnehmen.

Fig. 4b zeigt ein zweites Ausführungsbeispiels des rinnenförmigen Fahrwerkslenkers 2 in einer Querschnittansicht. Im Unterschied zu dem in den Figuren 1 bis 4a dargestellten ersten Ausführungsbeispiel weisen die Laschen 20 und 22 in dem zweiten Ausführungsbeispiel umgestellte Abschnitte 20.3 und 22.3 auf, welche als Anschlag oder Auflageflächen 20.1 und 22.1 für den Dämpfer dienen. Die umgestellten Abschnitte 20.3 und 22.3 sind dabei nach außen umgestellt. Bevorzugt sind die umgestellten Abschnitte 20.3 und 22.3 mit einem Winkel von ca. 90° gegenüber den im Wesentlichen parallel zu den Schenkeln 10 und 12 verlaufenden Abschnitten der Laschen 20 und 22 nach außen umgestellt.

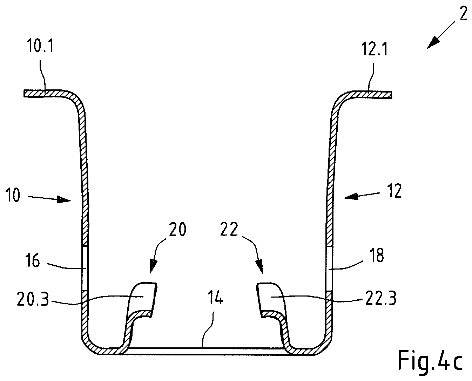

In Fig. 4c ist ein drittes Ausführungsbeispiel des rinnenförmigen Fahrwerkslenkers 2 in Querschnittansicht dargestellt. Im Unterschied zu dem in Fig. 4b dargestellten Ausführungsbeispiel weisen die Laschen 20 und 22 nach innen umgestellte Abschnitte 20.3 und 22.3 auf, welche als Anschlag oder Auflageflächen 20.1 und 22.1 für den Dämpfer dienen. Bevorzugt sind die umgestellten Abschnitte 20.3 und 22.3 in einem Winkel von ca. 90° gegenüber den parallel zu den Schenkeln 10 und 12 verlaufenden Abschnitten der Laschen 20 und 22 nach innen umgestellt.

Die Ausführung des erfindungsgemäßen Fahrwerkslenkers ist nicht auf die in der Zeichnung dargestellten Ausführungsbeispiele beschränkt. Vielmehr sind zahlreiche Varianten denkbar, die auch bei von den dargestellten Ausführungsbeispielen abweichender Ausführung von der in den Ansprüchen angegebenen Erfindung Gebrauch machen. Insbesondere können die als Einbauhilfen fungierenden Auflageflächen durch anders ausgestaltete Laschen vorgesehen werden.

## Patentansprüche

1. Fahrwerkslenker, insbesondere Federlenker aus formbarem Grundmaterial, vorzugsweise Stahlblech, für ein Kraftfahrzeug, mit einem ersten Endabschnitt (6) zur Anbindung an einen Fahrwerksträger, mit einem zweiten Endabschnitt (4) zur radseitigen Anbindung und mit einem mindestens ein Lagerauge (16, 18) aufweisenden Dämpferanbindungsabschnitt (8) zur Anbindung eines Dämpfers, wobei dem Lagerauge (16, 18) mindestens eine Einbauhilfe mit einer Auflagefläche (20.1, 22.1) für den Dämpfer zugeordnet ist,
**dadurch gekennzeichnet, dass** die Einbauhilfe einstückig mit dem Fahrwerkslenker ausgebildet ist, wobei die Einbauhilfe in Form einer Lasche (20, 22) aus dem Grundmaterial des Fahrwerkslenkers freigeschnitten und gegenüber einem Körperabschnitt des Fahrwerkslenkers umgestellt ist, und wobei zumindest ein Teil der Lasche (20, 22) als Auflagefläche (20.1, 22.1) für den Dämpfer ausgebildet ist.

2. Fahrwerkslenker nach Anspruch 1, **dadurch gekennzeichnet, dass** die Auflagefläche (20.1, 22.1) im Wesentlichen in Form eines Kreisbogens oder eines Ellipsenbogens ausgebildet ist.

3. Fahrwerkslenker nach Anspruch 1 oder 2, **dadurch gekennzeichnet, dass** eine Stirnseite der Lasche (20, 22) oder zumindest ein Teil der Stirnseite der Lasche (20, 22) die Auflagefläche (20.1, 22.1) bildet.

4. Fahrwerkslenker nach Anspruch 3, **dadurch gekennzeichnet, dass** die Stirnseite der Lasche (20, 22) neben der Auflagefläche (20.1, 22.1) zwei die Auflagefläche (20.1, 22.1) begrenzende, vorzugsweise im Wesentlichen parallel zueinander verlaufende, Randabschnitte (20.2, 22.2) aufweist.

5. Fahrwerkslenker nach Anspruch 1 oder 2, **dadurch gekennzeichnet, dass** die Lasche (20, 22) einen umgestellten Abschnitt (20.3) aufweist, welcher als Auflagefläche (20.1, 22.1) für den Dämpfer dient.

6. Fahrwerkslenker nach einem der Ansprüche 1 bis 5, **dadurch gekennzeichnet, dass** die Auflagefläche (20.1, 22.1) im Wesentlichen parallel oder koaxial zu der Mittelachse des Lagerauges (16, 18) verläuft.

7. Fahrwerkslenker nach einem der Ansprüche 1 bis 6, **dadurch gekennzeichnet, dass** zumindest der Dämpferanbindungsabschnitt (8) mit Ausnahme der Lasche (20, 22) als im Wesentlichen rinnenförmiger Körper umfassend eine Grundfläche (14) und zwei die Grundfläche (14) seitlich begrenzende Schenkel (10, 12) ausgebildet ist, wobei mindestens einer der Schenkel (10, 12) das mindestens eine Lagerauge (16, 18) aufweist.

8. Fahrwerkslenker nach Anspruch 7, **dadurch gekennzeichnet, dass** die Lasche (20, 22) eine in der Grundfläche (14) ausgebildete Aussparung (40) begrenzt, wobei die Lasche (20, 22) im Wesentlichen parallel zu dem das Lagerauge (16, 18) aufweisenden Schenkel (10, 12) umgestellt ist.

9. Fahrwerkslenker nach einem der Ansprüche 7 oder 8, **dadurch gekennzeichnet, dass** die Lasche (20, 22) zu dem das Lagerauge (16, 18) aufweisenden Schenkel (10, 12) einen Abstand im Bereich von größer 0 bis 60 mm, bevorzugt im Bereich von größer 0 bis 30 mm, aufweist.

10. Fahrwerkslenker nach einem der Ansprüche 1 bis 9, **dadurch gekennzeichnet, dass** der Dämpferanbindungsabschnitt (8) mindestens zwei einander gegenüberliegende und miteinander fluchtende Lageraugen (16, 18) aufweist, wobei die als Einbauhilfe dienende Lasche (20, 22) doppelt ausgeführt ist, indem jedem der beiden Lageraugen (16, 18) eine solche Lasche (20, 22) mit einer Auflagefläche (20.1, 22.1) für den Dämpfer zugeordnet ist.

11. Fahrwerkslenker nach Anspruch 10, **dadurch gekennzeichnet, dass** die beiden umgestellten Laschen (20, 22) zueinander spiegelsymmetrisch ausgebildet sind.

12. Verfahren zur Herstellung eines Fahrwerkslenkers, insbesondere eines Federlenkers für ein Kraftfahrzeug,
bei dem Metallblech, vorzugsweise Stahlblech, zu einer Platine zugeschnitten wird,
bei dem in das Metallblech vor, während oder nach dem Zuschnitt der Platine zumindest ein Lagerauge (16, 18) zur Anbindung eines Dämpfers und zumindest eine Aussparung (40) ausgeschnitten wird,
bei dem die Aussparung (40) dergestalt ausgeschnitten wird, dass durch die Aussparung (40) mindestens eine Lasche (20, 22) freigeschnitten ist,
bei dem die Platine in ein rinnenförmiges, eine Grundfläche (14) und zwei sich an die Grundfläche (14) seitlich anschließende Schenkel (10, 12) aufweisendes Bauteil umgeformt wird, so dass das Lagerauge (16, 18) in einem Schenkel (10, 12) und die Aussparung (40) in der Grundfläche (14) angeordnet sind, und bei dem nach dem Ausschneiden der Aussparung (40) und dem Formen des rinnenförmigen Bauteils die mindestens eine Lasche (20, 22) derart umgestellt wird, dass ein Teil der Lasche (20, 22) als Auflagefläche (20.1, 22.1) für einen mit dem Lagerauge (16, 18) zu verbindenden Dämpfer dient.

13. Verfahren nach Anspruch 12,
bei dem die Lasche (20, 22) bezogen auf die die Aussparung (40) aufweisende Grundfläche (14) des rinnenförmigen Bauteils mit einem Umstellwinkel im Bereich von 85° bis 95°, vorzugsweise mit einem Umstellwinkel von im Wesentlichen 90°, umgestellt wird.

14. Verfahren nach Anspruch 12 oder 13,
bei dem die Lasche (20, 22) so umgeformt wird, dass sie eine kragenförmige Auflagefläche (20.1, 22.1) als Auflagefläche für den Dämpfer aufweist.

15. Verfahren nach einem der Ansprüche 12 bis 14,
bei dem die Lasche derart umgestellt wird, dass sie zu dem das Lagerauge (16, 18) aufweisenden Schenkel (10, 12) einen Abstand im Bereich von größer 0 bis 60 mm, bevorzugt im Bereich von größer 0 bis 30 mm, aufweist.

## Claims

1. Chassis arm, in particular spring control arm made of formable base material, preferably sheet steel, for a motor vehicle, having a first end section (6) for connection to a chassis support, having a second end section (4) for connection at the wheel end and having a damper connection section (8) exhibiting at least one bearing eye (16, 18) for connecting a damper, wherein the bearing eye (16, 18) is assigned at least one installation aid with a support surface (20.1, 22.1) for the damper,
**characterised in that** the installation aid is formed integrally with the chassis arm, wherein the installation aid in the form of a tab (20, 22) is cut free from the base material of the chassis arm and converted to a body section of the chassis arm, and wherein at least one section of the tab (20, 22) is designed as a support surface (20.1, 22.1) for the damper.

2. Chassis arm according to Claim 1, **characterised in that** the support surface (20.1, 22.1) is designed primarily in the form of a circular arc or an elliptical arc.

3. Chassis arm according to Claim 1 or 2, **characterised in that** an end face of the tab (20, 22) or at least one part of the end face of the tab (20, 22) forms the support surface (20.1, 22.1).

4. Chassis arm according to Claim 3, **characterised in that** the end face of the tab (20, 22) next to the support surface (20.1, 22.1) has two edge sections (20.2, 22.2) bounding the support surface (20.1, 22.1), preferably running substantially mutually parallel.

5. Chassis arm according to Claim 1 or 2, **characterised in that** the tab (20, 22) has a converted section (20.3), which serves as a support surface (20.1, 22.1) for the damper.

6. Chassis arm according to any one of Claims 1 to 5, **characterised in that** the support surface (20.1, 22.1) is substantially parallel or coaxial to the central axis of the bearing eye (16, 18).

7. Chassis arm according to any one of Claims 1 to 6, **characterised in that** at least the damper connection section (8), with the exception of the tab (20, 22), is designed as a substantially trough-shaped body comprising a base surface (14) and two legs (10, 12) laterally bounding the base surface (14), wherein at least one of the legs (10, 12) exhibits the at least one bearing eye (16, 18).

8. Chassis arm according to Claim 7, **characterised in that** the tab (20, 22) bounds a recess (40) formed in the base surface (14), whereby the tab (20, 22) is converted to be substantially parallel to the leg (10, 12) exhibiting the bearing eye (16, 18).

9. Chassis arm according to any one of Claims 7 or 8, **characterised in that** the tab (20, 22) exhibits a distance in respect to the leg (10, 12) exhibiting the bearing eye (16, 18), said distance is in the range from greater than 0 to 60 mm, preferably in the range from greater than 0 to 30 mm.

10. Chassis arm according to any one of Claims 1 to 9, **characterised in that** the damper connection section (8) exhibits at least two bearing eyes (16, 18), being opposite and aligned with one another, wherein the tab (20, 22) serving as an installation aid is executed twice, **in that** each of the two bearing eyes (16, 18) is assigned such a tab (20, 22) with a support surface (20.1, 22.1) allocated to the damper.

11. Chassis arm according to Claim 10, **characterised in that** the two converted tabs (20, 22) are designed to be mutually mirror symmetrical.

12. Method for producing a chassis arm, in particular a spring control arm for a motor vehicle,
in which sheet metal, preferably sheet steel, is cut to a blank,
in which at least one bearing eye (16, 18) for connecting a damper and at least one recess (40) is cut free into the sheet metal before, during or after the cutting of the blank,
in which the recess (40) is cut out in such a way that at least one tab (20, 22) is cut free through the recess (40),
in which the blank is formed into one trough-shaped component, having one base surface (14) and two legs (10, 12) laterally adjoining the base surface (14), so that the bearing eye (16, 18) is arranged in one leg (10, 12) and the recess (40) is arranged in the base surface (14), and in which after cutting out the recess (40) and shaping the trough-shaped component, the at least one tab (20, 22) is converted such that a part of the tab (20, 22) serves as a support surface (20.1, 22.1) for a damper to be connected to the bearing eye (16, 18).

13. Method according to Claim 12,
in which the tab (20, 22) is arranged in relation to the base surface (14) exhibiting the recess (40) of the trough-shaped component with a conversion angle in the range from 85° to 95°, preferably with a conversion angle of primarily 90°.

14. Method according to Claim 12 or 13,
in which the tab (20, 22) is shaped so that it has a flanged support surface (20.1, 22.1) as a support surface for the damper.

15. Method according to any one of Claims 12 to 14, in which the tab is converted so that it has a distance in the range from greater than 0 to 60 mm, preferably in the range from greater than 0 to 30 mm to the leg (10, 12) exhibiting the bearing eye (16,18).

## Revendications

1. Bras de suspension, en particulier bras oscillant à ressort, se composant d'un matériau de base pouvant être moulé, se composant de préférence d'une tôle d'acier, bras de suspension conçu pour un véhicule automobile et ayant une première partie d'extrémité (6) servant à la fixation sur un support de châssis, ayant une seconde partie d'extrémité (4) servant à la fixation sur le côté roue et ayant une partie de fixation d'amortisseur (8) présentant au moins un œillet de palier (16, 18), ladite partie de fixation servant à la fixation d'un amortisseur, où au moins une aide au montage comportant une surface d'appui (20.1, 22.1) pour l'amortisseur est associée à l'œillet de palier (16, 18),
**caractérisé en ce que** l'aide au montage est configurée en formant une seule et même pièce avec le bras de suspension, où l'aide au montage se présentant sous la forme d'une patte (20, 22) est dégagée par découpe réalisée dans le matériau de base du bras de suspension et est retournée par rapport à une partie du corps du bras de suspension, et où au moins une partie de la patte (20, 22) est configurée pour servir de surface d'appui (20.1, 22.1) pour l'amortisseur.

2. Bras de suspension selon la revendication 1, **caractérisé en ce que** la surface d'appui (20.1, 22.1) est configurée pratiquement sous la forme d'un arc de cercle ou d'un arc d'ellipse.

3. Bras de suspension selon la revendication 1 ou 2, **caractérisé en ce qu'**un côté frontal de la patte (20, 22) ou bien au moins une partie du côté frontal de la patte (20, 22) forme la surface d'appui (20.1, 22.1).

4. Bras de suspension selon la revendication 3, **caractérisé en ce que** le côté frontal de la patte (20, 22) présente, à proximité de la surface d'appui (20.1, 22.1), deux parties de bordure (20.2, 22.2) délimitant la surface d'appui (20.1, 22.1) et s'étendant en étant de préférence pratiquement parallèles l'une à l'autre.

5. Bras de suspension selon la revendication 1 ou 2, **caractérisé en ce que** la patte (20, 22) présente une partie retournée (20.3) qui sert de surface d'appui (20.1, 22.1) pour l'amortisseur.

6. Bras de suspension selon l'une quelconque des revendications 1 à 5, **caractérisé en ce que** la surface d'appui (20.1, 22.1) s'étend en étant pratiquement parallèle à l'axe médian de l'œillet de palier (16, 18) ou s'étend de façon coaxiale par rapport audit axe médian.

7. Bras de suspension selon l'une quelconque des revendications 1 à 6, **caractérisé en ce qu'**au moins la partie de fixation (8) de l'amortisseur, à l'exception de la patte de fixation (20, 22), est configurée comme un corps pratiquement en forme de rigole, ledit corps comprenant une surface de basé (14) et deux branches (10, 12) délimitant latéralement la surface de base (14), où au moins l'une des branches (10, 12) présente l'œillet de palier (16, 18) au moins au nombre de un.

8. Bras de suspension selon la revendication 7, **caractérisé en ce que** la patte (20, 22) délimite un évidement (40) configuré dans la surface de base (14), où la patte (20, 22) est retournée pratiquement de façon parallèle à la branche (10, 12) présentant l'œillet de palier (16, 18).

9. Bras de suspension selon l'une des revendications 7 ou 8, **caractérisé en ce que** la patte (20, 22) présente, par rapport à la branche (10, 12) présentant l'œillet de palier (16, 18), un espacement se situant dans la plage allant de plus de 0 mm à 60 mm, se situant de préférence dans la plage allant de plus de 0 mm à 30 mm.

10. Bras de suspension selon l'une quelconque des revendications 1 à 9, **caractérisé en ce que** la partie de fixation (8) de l'amortisseur présente au moins deux œillets de palier (16, 18) se faisant face l'un l'autre et alignés l'un par rapport à l'autre, où la patte (20, 22) servant d'aide au montage est configurée de façon double, tandis qu'une telle patte (20, 22) ayant une surface d'appui (20.1, 22.1) pour l'amortisseur est associée à chacun des deux œillets de palier (16, 18).

11. Bras de suspension selon la revendication 10, **caractérisé en ce que** les deux pattes retournées (20, 22) sont configurées en ayant une symétrie à effet miroir l'une par rapport à l'autre.

12. Procédé de fabrication d'un bras de suspension, en particulier d'un bras oscillant à ressort, pour un véhicule automobile,
procédé dans lequel une tôle métallique, de préférence une tôle en acier, est découpée pour former une platine,
procédé dans lequel au moins un œillet de palier (16, 18) servant à la fixation d'un amortisseur et au moins un évidement (40) sont découpés dans la tôle métallique, ladite découpe étant réalisée avant, pendant ou après la découpe de la platine, procédé dans lequel l'évidement (40) est découpé de manière telle, qu'au moins une patte (20, 22) soit dégagée par découpe réalisée à travers l'évidement (40),
procédé dans lequel la platine est transformé en un composant en forme de rigole, ledit composant présentant une surface de base (14) et deux branches (10, 12) se raccordant latéralement à la surface de base (14), de sorte que l'œillet de palier (16, 18) est disposé dans une branche (10, 12), l'évidement (40) étant disposé dans la surface de base (14), et
procédé dans lequel, après la découpe de l'évidement (40) et après le moulage du composant en forme de rigole, la patte (20, 22) au moins au nombre de un est retournée de manière telle, qu'une partie de la patte (20, 22) serve de surface d'appui (20.1, 22.1) pour un amortisseur à relier à l'œillet de palier (16, 18).

13. Procédé selon la revendication 12,
dans lequel la patte , (20, 22) est retournée en formant un angle de retournement se situant dans la plage allant de 85° à 95°, de préférence en formant un angle de retournement pratiquement de 90°, ladite patte étant retournée par rapport à la surface de base (14) du composant en forme de rigole, ladite surface de base présentant l'évidement (40).

14. Procédé selon la revendication 12 ou 13, dans lequel la patte (20, 22) est façonnée de manière telle, qu'elle présente une surface d'appui (20.1, 22.1), en forme de collerette, servant de surface d'appui pour l'amortisseur.

15. Procédé selon l'une quelconque des revendications 12 à 14,
dans lequel la patte est retournée de manière telle, qu'elle présente, par rapport à la branche (10, 12) présentant l'œillet de palier (16, 18), un espacement se situant dans la plage allant de plus de 0 mm à 60 mm, se situant de préférence dans la plage allant de plus de 0 mm à 30 mm.
